# EUROPÄISCHE PATENTSCHRIFT

(11) **EP 2 172 032 B1**
(45) Veröffentlichungstag und Bekanntmachung des Hinweises auf die Patenterteilung: **22.12.2010**
(21) Anmeldenummer: 08773572.6
(22) Anmeldetag: 21.06.2008
(51) Int. Cl.: H04N 13/00, G11B 27/00

(54) **VERFAHREN ZUR BEARBEITUNG EINES RÄUMLICHEN BILDES**
METHOD FOR PROCESSING A SPATIAL IMAGE
PROCÉDÉ DE TRAITEMENT D'UNE IMAGE SPATIALE

(30) Priorität: 13.07.2007 DE 102007033239
(43) Veröffentlichungstag der Anmeldung: 07.04.2010
(73) Patentinhaber: 3D International Europe GmbH, 07745 Jena (DE)
(72) Erfinder: MEICHSNER, Jens, 99425 Weimar (DE)
(74) Vertreter: Geyer, Fehners & Partner
(86) Internationale Anmeldenummer: PCT/EP2008/005026
(87) Internationale Veröffentlichungsnummer: WO 2009/010152

(56) Entgegenhaltungen:
- WO-A-2008/040918
- US-A1- 2005 135 675

## Beschreibung

### Gebiet der Erfindung

Die Erfindung betrifft ein Verfahren zur Bearbeitung eines räumlichen, aus Bilddaten von n Teilbildern i zusammengesetzten Bildes oder einer zeitlichen Sequenz von solchen Bildern, mit n > 1 und i = 1,...,n, bei dem die Bearbeitung des Bildes sequentiell und/oder parallel ganz oder in Teilen durch die Bearbeitung der Bilddaten in einzelnen Bearbeitungsmodulen entsprechend einer Ausführungsreihenfolge und in Abhängigkeit von einstellbaren Bearbeitungsparametern erfolgt, wobei jedes Bearbeitungsmodul einen oder mehrere Bearbeitungsschritte durchführt, einem Knotenpunkt zugeordnet ist und die Ausführungsreihenfolge durch eine wählbare Verknüpfung der Knotenpunkte festgelegt wird, und wobei jeder Knotenpunkt mit den Knotenpunkten, mit denen er entsprechend der Ausführungsreihenfolge verknüpft ist, Daten austauschen kann. Die Erfindung betrifft das Problem einer effizienten Bildbearbeitung dreidimensional anzuzeigender Bilder, bei der größere Datenmengen als bei der Bearbeitung zweidimensional anzuzeigender Bilder verarbeitet werden müssen.

### Stand der Technik

Im Stand der Technik sind verschiedene Verfahren bekannt, mit denen Bilder oder Bildsequenzen, also beispielsweise Videos, mit Hilfe eines Computers bearbeitet werden können, wobei der Bearbeitungsstand jeweils angezeigt wird. Bei den einfachsten Bildbearbeitungsmethoden muß ein Benutzer dabei auswählen, welche Filter bzw. Bearbeitungsmodule er auf das Bild anwenden will. So gibt es beispielsweise Weichzeichnermodule, Scharfzeichnermodule oder Farbkorrekturmodule, um nur einige zu nennen. Bei Auswahl eines Filters wird dieser Filter auf sämtliche Bilddaten bzw. die Bilddaten in einem frei definierbaren Bereich angewendet, das Ergebnisbild wird berechnet und dargestellt. Für das Ergebnisbild werden jeweils alle Bilddaten neu berechnet.

Bei modernen Methoden zur Bildbearbeitung lassen sich verschiedene Bearbeitungsmodule zu Ausführungsreihenfolgen bzw. Batch-Prozessen zusammenfügen, eine solche Ausführungsreihenfolge wird dann bevorzugt graphisch dargestellt. Dabei kann ein Benutzer die Bearbeitungsmodule eigenständig auswählen und nach Art einer Baumstruktur zusammenfügen. Die Bearbeitungsmodule korrespondieren dabei zu Knotenpunkten, die Bearbeitungsmodule bzw. Knotenpunkte können miteinander verknüpft werden, so daß beispielsweise einem nachgeordneten Bearbeitungsmodul Daten von mehreren vorgeordneten Bearbeitungsmodulen zufließen. Dies ist beispielsweise dann der Fall, wenn Daten aus zwei verschiedenen Bildern in ein Gesamtbild kombiniert werden sollen. Dabei ist es auch möglich, Bearbeitungsmodule selbst zu entwerfen und als so genannte *Plug-Ins* in das Programm und die Ausführungsreihenfolge einzubinden. Bei zwei miteinander verknüpften Bearbeitungsmodulen werden zunächst die notwendigen Bearbeitungsschritte in dem in der Ausführungsreihenfolge vorgeordneten Bearbeitungsmodul durchgeführt, die gesamten Bilddaten, die durch das Bearbeitungsmodul mindestens teilweise modifiziert sind, dann an das in der Ausführungsreihenfolge nachgeordnete Bearbeitungsmodul übertragen, wo sie dann ebenfalls bearbeitet werden.

Ähnliche Verfahren zur Bildbearbeitung haben sich auch in der Bearbeitung von Bildsequenzen, beispielsweise in Videoschnittprogrammen, etabliert. Einzelne Bildsequenzen werden dort als *Stream* bezeichnet, und ähnlich wie sich beispielsweise zwei Bilder zu einem Gesamtbild überlagern lassen, so lassen sich mehrere *Streams* zu einem neuen *Stream* kombinieren, wenn beispielsweise eine Bildsequenz mit einem Titel unterlegt werden soll. Jeder von den *Streams* kann dabei unabhängig von anderen bearbeitet werden, auch hier lassen sich die oben schon für einzelne Bilder beispielhaft angeführten Filterfunktionen anwenden. Ist die Bearbeitung einer solchen Sequenz oder einer Kombination von Sequenzen abgeschlossen, so wird das Ergebnis auf einem Bildschirm angezeigt. Auch während der Bearbeitung ist die Anzeige der einzelnen Schritte bzw. der einzelnen Bildsequenzen gesondert möglich.

Auch bei diesem Verfahren werden sämtliche Bilddaten bei Änderung eines Bearbeitungsparameters wie beispielsweise der Hinzufügung eines Farbfilters oder Weichzeichners neu berechnet und entsprechend der Baumstruktur bzw. Ausführungsreihenfolge von dem Modul an, wo die Änderung des Parameters stattgefunden hat bzw. bei einem global einzustellenden Parameter von Anfang an, entsprechend der Hierarchie nach unten übertragen. Dabei werden jeweils alle Bilddaten neu berechnet und in der Hierarchie nach unten weitergereicht. Ein solches Verfahren, welches dem Benutzer einer graphischen Oberfläche die Bearbeitung von Videosequenzen ermöglicht, ist beispielsweise in der US-A-6,768,499 beschrieben. Bearbeitungsmodule werden hier entsprechend einer Abarbeitungsreihenfolge in einer hierarchischen Baumstruktur graphisch zusammengefaßt, die Baumstruktur umfaßt Knotenpunkte, an denen beispielsweise verschiedene *Streams* bzw. Spuren zusammengefaßt werden, andere Knoten bezeichnen die Bearbeitungsmodule. Durch die Baumstruktur werden die Knoten verbunden.

Anordnungen, die ein ähnliches Verfahren durchführen, sind beispielsweise in der WO-A-99/52276 beschrieben. Auch hier können mehrere Datenströme bearbeitet und kombiniert werden, wobei eine Beschleunigung der Bearbeitung dadurch erreicht wird, daß mehrere Datenströme gleichzeitig bearbeitet werden. Auf diese Weise soll eine Verarbeitung in Echtzeit möglich werden, d.h. zum einen daß das Ergebnis sofort auf dem Bildschirm dargestellt wird bzw. bei gleichzeitiger Aufnahme das bearbeitete Ergebnis ohne wesentlichen Zeitverlust auf einen Bildschirm dargestellt wird.

Sowohl bei diesen Verfahren als auch bei den vorangehend beschriebenen Verfahren werden alle Rechenoperationen dabei im Prozessor der Hauptplatine durchgeführt. Während für zweidimensionale Bildinhalte die beschriebenen Verfahren ausreichend sind, so stößt man bei Übertragung dieser Verfahren auf dreidimensionale Inhalte schnell an die Grenzen, da die zu verarbeitenden Datenmengen um ein Vielfaches größer sind. Zwar reichen prinzipiell schon zwei aus verschiedenen Perspektiven aufgenommene Ansichten eines Gegenstandes aus, um ein Stereobild oder eine Stereobildsequenz zu erzeugen, die einen räumlichen Eindruck vermitteln kann, da die Bewegungsfreiheit des Betrachters vor dem Bildschirm dann jedoch stark eingeschränkt ist, werden in der Regel mehrere Ansichten aus verschiedenen Perspektiven aufgenommen oder nachträglich erzeugt. Eine typische Größenordnung für die Anzahl der verwendeten Ansichten ist acht. Mit den bisher im Stand der Technik bekannten Methoden ist eine Echtzeitdarstellung der Bearbeitung von 3D-Videos nicht möglich, daß heißt, nach Durchführung eines Arbeitsschritts vergeht immer eine gewisse Zeit, bis das Ergebnis auf einem Bildschirm dargestellt wird. Hauptproblem dabei ist die Menge der zu bewältigten Daten.

Ein Ansatz, die Datenmengen zu reduzieren, findet sich beispielsweise in der US-A-2003/0156822. Hier wird ein Verfahren zur Bearbeitung von Bildsequenzen aus mehreren Spuren bzw. *Streams* beschrieben. Wird während der Bearbeitung ein Teilabschnitt einer solchen Spur gelöscht, so findet keine tatsächliche Löschung der Daten auf der Festplatte oder des Speichermediums statt, sondern es werden entsprechende Markierungen, sogenannten *Pointer* gesetzt, die auf die entsprechenden Positionen innerhalb der Spur zeigen.

In die Spur selbst wird also nicht eingegriffen, was die Datenverwaltung vereinfacht und die Bearbeitungszeit verringert. Bei den Bildsequenzen, die in der US-A-2003/0156822 A1 verarbeitet werden, handelt es sich um sogenannte *Multi-View-Streams*, d.h. Bildsequenzen, die eine gemeinsame Zeitachse haben. Die Inhalte können jedoch unterschiedlich sein. Beispielsweise kann es sich um die Aufnahmen von Fernsehkameras während einer Show handeln, von denen zwei einen Moderator aus verschiedenen Perspektiven aufnehmen, eine dritte Kamera aber beispielsweise das Publikum.

Bei der Verwendung von solchen *Multi-View-Streams* ist es jedoch ohne weiteres möglich, die *Streams* so auszugestalten, daß jeder der *Streams* ein und dieselbe Szene zeigt, jedoch aus leicht unterschiedlichen Perspektiven. Die Datenströme der verschiedenen Ansichten können dann be- und auch verarbeitet werden und auf einem Bildschirm, der zur Darstellung von räumlichen Inhalten geeignet ist, räumlich dargestellt werden. Bei einem in der WO-A-2006/049384 beschriebenen Verfahren werden die Datenströme aller Ansichten verarbeitet. Nach einer ersten Korrektur, mit der das Rauschen beseitigt wird, werden Kameraparameter bestimmt und ein Modell der Szene berechnet. Dabei stehen Informationen zur Verfügung, in welcher Tiefe sich einzelne Objekte - von den Kamerapositionen aus gesehen - befinden. Aus diesen Informationen werden nach weiteren Bearbeitungsschritten räumlich darstellbare Bilder erzeugt. Eine Übertragung auf Bildsequenzen ist jedoch aufgrund der zu bearbeitenden Datenmengen umständlich und nicht befriedigend, da zu viele Berechnungen durchgeführt werden. Diese Berechnungen sind zwar notwendig, um grundsätzlich räumlich darstellbare Bilder erzeugen zu können, möchte man solche Bilder oder Bildsequenzen jedoch nachträglich bearbeiten, so läßt sich das Verfahren nicht anwenden.

Die im Stand der Technik bekannten Verfahren eignen sich kaum zur nachträglichen Bildbearbeitung von Bildern und insbesondere Bildsequenzen für die räumliche Darstellung bzw. *Multi-View-Streams*, bei denen Filter oder Funktionen auf die Bilddaten angewendet werden sollen, da es selbst mit den derzeit leistungsfähigsten Prozessoren nicht möglich ist, das Ergebnis der Bearbeitung in Echtzeit darzustellen, so daß ein Benutzer auf den Effekt einer von ihm eingeführten Änderung, beispielsweise eines Weichzeichners oder einer Farbkorrektur, eine gewisse Zeit warten muß. Die Bearbeitung solcher Bildinhalte ist daher sehr zeitaufwendig und mit hohen Kosten verbunden.

### Beschreibung der Erfindung

Aufgabe der Erfindung ist es, ein Verfahren zur Bearbeitung von räumlich darstellbaren Bildern oder Bildsequenzen dahingehend weiterzuentwickeln, daß eine Bearbeitung zumindest nahezu in Echtzeit möglich ist, d.h. ein Bearbeiter den Einfluß der von ihm vorgenommenen Änderungen an Einstellungen möglichst ohne Zeitverzögerung sieht, insbesondere auch im Hinblick auf die räumliche Darstellung.

Diese Aufgabe wird bei einem Verfahren der eingangs beschriebenen Art dadurch gelöst, daß bei einer Änderung eines oder mehrerer Bearbeitungsparameter für je zwei in der Ausführungsreihenfolge miteinander verknüpfte Knotenpunkte (a) ein vorgeordnetes Bearbeitungsmodul, welches dem in der Ausführungsreihenfolge vorgeordneten Knotenpunkt zugeordnet ist, einem nachgeordneten Bearbeitungsmodul, welches dem in der Ausführungsreihenfolge nachgeordneten Knotenpunkt zugeordnet ist, übermittelt, welche Bereiche der am vorgeordneten Bearbeitungsmodul vorliegenden Bilddaten von der Änderung betroffen sind, (b) das nachgeordnete Bearbeitungsmodul dem vorgeordneten Bearbeitungsmodul übermittelt, welche mit dem oder den geänderten Bearbeitungsparametern neu bestimmte Bilddaten es zur Durchführung seiner Bearbeitungsschritte benötigt, und das vorgeordnete Bearbeitungsmodul nur diese Bilddaten neu berechnet und an das nachgeordnete Bearbeitungsmodul übermittelt.

Die Bilddaten, die bevorzugt einem aus n Teilbildern i zusammengesetzten Bild oder einer zeitlichen Sequenz solcher Bilder entsprechen, mit n > 1 und i = 1,...,n, können als Computergrafik erstellt oder als Kameraaufnahme mit n aufgenommenen Teilbildern aufgezeichnet worden sein. Auch eine Mischung aus beiden - also ein *Multi-View-Stream* mit teilweise real aufgenommenen und teilweise mittels Computergrafik erzeugten Objekten - ist möglich. Für die Erstellung der Teilbilder auf Basis einer Computergrafik eignen sich kommerziell erhältliche Animationsprogramme wie Autodesk Maya oder Autodesk 3D Studio MAX; mit diesen werden die Teilbilder als separate perspektivische Ansichten mit leicht verschiedenen Kamerapositionen gerendert. Alternativ kann auch eines der n Teilbilder i einer Tiefenkarte der dargestellten Szene entsprechen.

Bei den Bearbeitungsparametern kann es sich dabei um lokale Bearbeitungsparameter handeln, die direkt am vorgeordneten Bearbeitungsmodul oder an einem der diesem vorgeordneten Bearbeitungsmodule eingestellt werden, oder aber um globale Bearbeitungsparameter, die die gesamte Ausführungsreihenfolge beeinflussen. Werden beispielsweise zwei *Streams* verwendet, von denen der eine einen farbigen Text zeigt, der sich von links nach rechts bewegt und im Vordergrund stehen soll, und ein zweiter *Stream* eine Hintergrundszene zeigt, die sich nicht bewegt oder mit geringerer Geschwindigkeit dreht oder bewegt, so daß der Text räumlich gegenüber dem Hintergrund abgesetzt ist, so sind die Farbe des Textes, die Schriftart und die Zeichenkette - d.h. der Text selbst - des ersten *Streams* ein lokaler Bearbeitungsparameter. Da es sich um eine Bildsequenz handelt, in der der Text von links nach rechts schwebt, ist ein globaler Bearbeitungsparameter beispielsweise die Zeit t. Wird also beispielsweise die Farbe des Textes geändert, so muß zum einen nur der *Stream,* der den Text darstellt, geändert werden. Bei der Kombination der beiden *Streams* werden dann die Bilddaten nur in den Bereichen des Bildes neu bestimmt, auf die der Text Einfluß hat. Eine erneute Berechnung anderer Bilddaten ist nicht notwendig. Während im Stand der Technik bei solchen Verfahren Daten und Informationen nur in einer Richtung, im Baum von oben nach unten fließen, so kommunizieren zwei miteinander verknüpfte Bearbeitungsmodule auch in der umgekehrten Richtung. Ändert sich ein Bearbeitungsparameter, so wird zunächst der Bereich des Bildes bzw. der Bilddaten - dies entspricht beispielsweise bei in einer mindestens zweidimensionalen Matrix gespeicherten Bilddaten, deren Indizes zu Koordinaten im Bild oder Teilbild korrespondieren, einer oder mehreren Gruppen von Werten für die Indizes - bestimmt, auf den dieser Bearbeitungsparameter Einfluß hat, d.h. der von der Änderung des Parameters betroffen ist. Dieser Bereich wird sukzessive oder auch direkt allen Bearbeitungsmodulen an nachgeordneten Knotenpunkten übermittelt. Jedes nachgeordnete Bearbeitungsmodul ist auf diese Weise in der Lage, alle Bereiche, die ihm von vorgeordneten Bearbeitungsmodulen übermittelt wurden, zu einem Bereich zusammenzufassen und diesen and das nachfolgende Bearbeitungsmodul zu übermitteln. Die nachgeordneten Bearbeitungsmodule wiederum überprüfen ihrerseits, ob der von der Änderung des Parameters betroffene Bereich auf die von ihnen gehaltenen Bilddaten Einfluß hat, so daß diese neu berechnet werden müssen. Wird beispielsweise die Schriftart des Textes geändert, so müssen die Bilddaten, die allein die Hintergrundszene betreffen, nicht neu berechnet werden.

Das in der Ausführungsreihenfolge letzte Bearbeitungsmodul überprüft als erstes, ob es Bilddaten neu berechnen muß und wenn ja, welche Daten dazu nötig sind. Diese Information wird dann an das vorgeordnete Bearbeitungsmodul übermittelt, welches nun seinerseits diese Überprüfung vornimmt. Die bei diesem vorgeordneten Bearbeitungsmodul notwendigen Bilddaten können dieselben sein, es kann sich aber auch um andere Bilddaten handeln. Zusammen mit der Information vom nachgeordneten Bearbeitungsmodul werden diese Informationen weiter an das nächste vorgeordnete Bearbeitungsmodul übermittelt, bis rekursiv das erste betroffene Bearbeitungsmodul - bei Verzweigungen auch mehrere erste Bearbeitungsmodule - gefunden ist, welches von der Änderung betroffen ist und mindestens teilweise neue Bilddaten berechnen muß. Ebenso muß das jeweilige Bearbeitungsmodul, an welchem an der Ausführungsreihenfolge letztmalig Bilddaten neu zu berechnen sind, nicht das letzte Bearbeitungsmodul überhaupt in der Ausführungsreihenfolge sein.

Hat ein nachgeordnetes Bearbeitungsmodul dem vorgeordneten Bearbeitungsmodul mitgeteilt, welche Bilddaten neu bestimmt werden müssen, bzw. welche es neubestimmt benötigt, damit es seine Bearbeitungsschritte durchführen kann, so werden diese Bilddaten vom vorgeordneten Bearbeitungsmodul neu berechnet, wobei unter Umständen auf weitere vorgeordnete Bearbeitungsmodule zurückgegriffen werden muß. Die neu berechneten Bilddaten und nur diese werden an das nachgeordnete Bearbeitungsmodul übermittelt. Eine erneute Berechnung aller Bilddaten ist nicht notwendig. Auf diese Weise kann gegenüber dem Stand der Technik Zeit und Rechenleistung eingespart werden.

Da nur ein Teil bzw. ein Bereich der Bilddaten neu berechnet und an das nachgeordnete Bearbeitungsmodul übermittelt wird, impliziert dies, daß zumindest die Eingangsdaten, die das Bearbeitungsmodul für seine Berechnungen benötigt, von diesem Bearbeitungsmodul zeitweise gespeichert werden. Die bei einer Änderung eines Bearbeitungsparameters neu bestimmten und neu übermittelten Bilddaten überschreiben dann einen Teil der ursprünglichen Bilddaten und fließen in die Verarbeitung mit ein. Das Bearbeitungsmodul berechnet seine Ausgangsdaten, die es an das nächste nachgeordnete Bearbeitungsmodul übermittelt, dann ganz oder teilweise erneut, übermittelt jedoch nur die angeforderten bzw. notwendigen Bilddaten an das folgende Bearbeitungsmodul.

In einer zweckmäßigen Ausgestaltung der Erfindung werden bei einer Änderung eines Bearbeitungsparameters bereits bearbeitete Bilddaten in den Bearbeitungsmodulen, bevorzugt in Abhängigkeit von der Art der in einem Bearbeitungsmodul durchzuführenden Bearbeitungsschritte gespeichert. Das bedeutet, daß nicht nur die Eingangsdaten, die für die Bearbeitung notwendig sind, teilweise gespeichert werden, sondern auch mindestens der Teil der Ausgangsdaten, der sich bei Änderung des Bearbeitungsparameters nicht ändert. Bei einer Änderung des Farbwertes für einen Teil der Bilddaten bedeutet dies, daß sich die Tiefeninformation für verschiedene Gegenstände in der Szene, beispielsweise dem oben schon angeführten Text, der vor einer Hintergrundszene schwebt, sich nicht ändert. Bestimmt das nachgeordnete Bearbeitungsmodul die Tiefe, so müssen diese Daten nicht neu berechnet werden. Handelt es sich bei den in den Bearbeitungsmodulen durchgeführten Bearbeitungsschritten nur um einfache und schnell durchzuführende Operationen, so kann es jedoch zweckmäßig sein, zugunsten des Speicherplatzes auf die Speicherung der Bilddaten zu verzichten und diese jeweils neu zu berechnen.

In einer besonders bevorzugten Ausgestaltung der Erfindung werden die Bearbeitungsschritte mindestens teilweise bzw. bevorzugt auf einer Grafikkarte durchgeführt. Dabei werden die Operationen, die die Bearbeitungsschritte der Bearbeitungsmodule ausführen, in Grafikbefehle für die Grafikkarte übersetzt, an die deswegen besondere Anforderungen zu stellen sind, derzeit sind dies insbesondere der OpenGL 2.0 Standard, außerdem muß der Pixelshader Model 3 und/oder OpenGL Shading Language 1.0, oder Entsprechendes auf der Grafikkarte implementiert sein. Weiterentwicklungen oder entsprechende, hier nicht erwähnte Funktionsbibliotheken sind selbstverständlich auch verwendbar. Dies bringt außerdem den Vorteil, daß die Bearbeitung unabhängig vom ursprünglichen Bildformat, in der Regel RGB-Alpha mit je acht Bit Farbtiefe pro Kanal, durchgeführt werden können. Die Grafikkarte bestimmt intern das Rechenformat, welches verwendet wird. Insbesondere sind dabei auch Formate von deutlich höherer Qualität möglich, beispielsweise RGB-Alpha mit je zehn Bit Tiefe pro Farbkanal oder ein 16/32-Bit-Floating-Point-Format. Auch andere Farbräume bzw. andere Formate als RGB können verwendet werden, beispielsweise solche, die die Lumineszenz und andere Daten speichern. Die Einbeziehung der Grafikkarte in die Rechenoperationen trägt ebenfalls dazu bei, daß die Konsequenzen von Änderungen der Bearbeitungsparameter nahezu in Echtzeit auf einen Bildschirm dargestellt werden können, so daß eine interaktive Bearbeitung möglich ist. Ändern sich die Parameter in großen Schritten, und müßten, um zum Ergebnisbild zu gelangen, viele Zwischenbilder berechnet werden, so ist es auch möglich, bestimmte Zwischenergebnisbilder bei der Berechnung auszulassen (*Frame-Dropping*). Dabei kann es außerdem sinnvoll sein, nicht alle Rechenoperationen auf die Grafikkarte zu verlagern, sondern darauf zu achten, daß der Prozessor der Grafikkarte und der oder die Prozessoren auf der Hauptplatine gleichermaßen ausgelastet werden.

Zweckmäßig werden bei der Bearbeitung die Bearbeitungsmodule und die Ausführungsreihenfolge auf einen Bildschirm dargestellt. Ein Benutzer sieht somit sofort die Ausführungsreihenfolge und kann, beispielsweise mit Drag-and-Drop-Funktionen, Bearbeitungsmodule zufügen oder entfernen und neue Verknüpfungen in der Ausführungsreihenfolge erstellen.

In dem efindungsgemäßen Verfahren ist es möglich, einer Vielzahl von Bearbeitungsparametern zu verwenden und zu ändern. Viele der Bearbeitungsparameter sind dabei an spezielle Bearbeitungsmodule gekoppelt. Typische Bearbeitungsmodule, wie sie auch in der Bild- und Videobearbeitung seit langem verwendet werden, sind beispielsweise Weich- oder Scharfzeichner, bei denen vorgegebene Funktionen auf die Bilddaten bzw. Pixel angewendet werden, Module zur Beeinflussung der Farben, bei denen beispielsweise Pixel direkt Farben zugewiesen werden können, oder aber je nach gewähltem Farbraum auch Sättigung, Grauwert oder Farbton geändert werden. Weitere Bearbeitungsmodule können beispielsweise Überlagerungsfunktionen, Mischungsfunktionen, sowie Module, mit denen mathematische Funktionen dargestellt werden, *Text-Rendering,* mit dem ein vorgegebener Text auf dem Bildschirm in vorgegebener Art und Weise in bezug auf Schrifttyp und andere Eigenschaften darstellbar gemacht wird, Module, die geometrische Formen oder Linien erzeugen, und schließlich auch eine Umwandlung von zweidimensionalen in dreidimensionale Bilddaten. Vielen von diesen Bearbeitungsmodulen sind lokale Bearbeitungsparameter zugeordnet, beispielsweise Farbwerte, Sättigungswerte, Radien für Weichzeichner basierend auf Gauß-Funktionen, etc. Andere Funktionsparameter sind globale Bearbeitungsparameter. Zweckmäßigerweise wird der Index i, der die Teilbilder aus dem Bereich 1 bis n bezeichnet, als Bearbeitungsparameter verwendet. Bei der Auswahl eines Teilbildes i - automatisch oder durch einen Benutzer - wird dieses dann bevorzugt auf einem ersten Bildschirm angezeigt. Das Teilbild selbst ist zweidimensional, es genügt daher ein Bildschirm, der für die zweidimensionale Darstellung geeignet ist. Dabei kann das Teilbild beispielsweise so dargestellt werden, wie es sich am Ende der Ausführungsreihenfolge ergibt, bevor es mit den anderen Teilbildern zu einen räumlichen Bild zusammengesetzt wird, oder - bei Auswahl eines Bearbeitungsmoduls - auch so, wie es sich an diesem Knotenpunkt darstellt.

In einer bevorzugten Ausgestaltung der Erfindung wird das aus den n Teilbildern i zusammengesetzte Bild räumlich auf einem zweiten Bildschirm dargestellt. Ein Benutzer hat somit auch jeweils das Gesamtergebnis vor Augen. Der zweite Bildschirm ist dabei zur dreidimensionalen Darstellung geeignet, er kann dabei rein zur dreidimensionalen Darstellung ausgelegt sein, er kann aber auch umschaltbar zwischen zweidimensionaler und dreidimensionaler Darstellung sein. Auch die Zusammenfassung von erstem und zweitem Bildschirm auf einem gemeinsamen Display, was mindestens teilweise zur dreidimensionalen Darstellung ausgelegt ist, ist denkbar. Der zweite Bildschirm ist dabei für die dreidimensionale Darstellung nach einem oder mehreren bekannten Verfahren geeignet, beispielsweise kann die Darstellung mittels eines brillenfreien Barriere- oder Filterarray-Verfahrens, eines Lentikularverfahrens, eines brillenbasierten Verfahrens oder eines zeitlich-sequentiellen Verfahrens erfolgen, um nur einige zu nennen.

Was für einzelne Bilder gilt, trifft grundsätzlich auch auf Bildsequenzen, beispielsweise digitale Videos zu. Hier wird auch die einem Bild in dieser Sequenz zugeordnete Zeit t als Bearbeitungsparameter verwendet, optional auch der Index i eines Teilbildes. Bei Auswahl einer Zeit t und eines Teilbildes i wird das entsprechende Teilbild auf einem ersten Bildschirm dargestellt. Das aus den n Teilbildern i zusammengesetzte Bild kann außerdem zur Zeit t räumlich auf einem zweiten Bildschirm, der für die räumliche Darstellung geeignet ist, dargestellt werden. Auch dieser Bildschirm kann umschaltbar zwischen zweidimensionaler und dreidimensionaler Darstellungsweise ausgelegt sein, er kann auch mit dem ersten Bildschirm zusammen in einem gemeinsamen Display integriert sein.

Bei der Darstellung des dreidimensionalen Bildes bzw. der dreidimensionalen Bildsequenz wirkt sich das erfindungsgemäße Verfahren vorteilhaft aus, da die Anzahl der notwendigen Rechenoperationen bei Veränderung der Bearbeitungsparameter stark reduziert und bevorzugt auch die Grafikkarte für die Berechnungen der Bearbeitungsschritte herangezogen wird. Auf diese Weise ist eine nahezu zeitverzögerungsfreie Rückkopplung an einen Bediener möglich.

In einer weiteren bevorzugten Ausgestaltung der Erfindung wird bei der Auswahl eines Bearbeitungsmoduls durch einen Benutzer das Bild und/oder ein oder mehrere Teilbilder i aus dem Bearbeitungsmodul vorliegenden Bilddaten zusammengesetzt, d.h. es wird nicht das Endergebnis dargestellt, sondern das Bild, wie es bei diesen Bearbeitungsmodul vorliegt, so daß die Auswirkungen nachfolgender Bearbeitungsschritte ausgeblendet werden. Dabei wird das eine Teilbild und/oder die mehreren Teilbilder i auf einem ersten Bildschirm und das aus den Teilbildern i zusammengesetzte Bild räumlich auf einem zweiten Bildschirm dargestellt.

Es versteht sich, daß die vorstehend genannten und die nachstehend noch zu erläuternden Merkmale nicht nur in den angegebenen Kombinationen, sondern auch in anderen Kombinationen oder in Alleinstellung einsetzbar sind, ohne den Rahmen der vorliegenden Erfindung zu verlassen.

### Kurze Beschreibung der Erfindung

Nachfolgend wird die Erfindung beispielhaft anhand der beigefügten Zeichnungen, die auch erfindungswesentliche Merkmale offenbaren, noch näher erläutert. Es zeigen:
- Fig.1: den Aufbau einer Anordnung, die zur Bildverarbeitung genutzt werden kann,
- Fig.2: einen Bildschirm während der Bearbeitung des Bildes, und
- Fig.3: miteinander verknüpfte Bearbeitungsmodule der Ausführungsreihenfolge aus Fig.2.

### Ausführliche Beschreibung der Erfindung

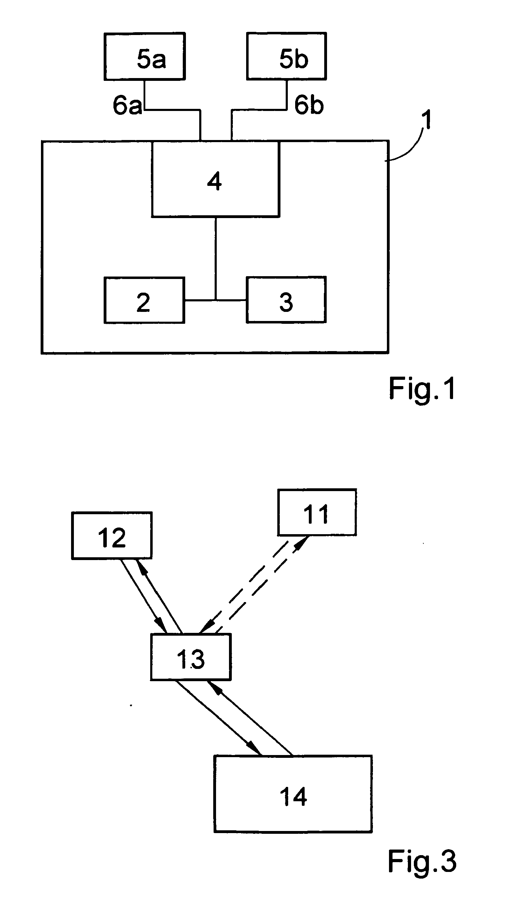

In Fig.1 ist zunächst eine Anordnung dargestellt, mit der ein räumliches, aus Bilddaten von n Teilbildern i zusammengesetztes Bild oder eine zeitliche Sequenz von solchen Bildern, mit n > 1 und i = 1,...,n, bearbeitet werden kann. Die Bearbeitung des Bildes kann dabei sequentiell und/oder parallel ganz oder in Teilen erfolgen, wobei die Bilddaten in einzelnen Bearbeitungsmodulen entsprechend einer Ausführungsreihenfolge und in Abhängigkeit von einstellbaren Bearbeitungsparametern bearbeitet werden. Eine solche Anordnung besteht beispielsweise aus einem Computer 1, bei dem es sich beispielsweise um einen leistungsfähigen PC oder ein leistungsfähiges Notebook handelt. Der Computer 1 enthält als wesentlichen Bestandteil eine Hauptplatine 2, auf der auch Module mit *Random-Access-Memory* angeordnet sind. Auf einer Festplatte 3 oder einem äquivalenten, les- und beschreibbaren Speichermedium werden die Bilder und/oder Bildsequenzen vor und nach der Bearbeitung gespeichert, gegebenenfalls kann die Festplatte 3 auch zur Zwischenspeicherung von Bilddaten, etwa wenn ein Bearbeitungsstand zwischengespeichert werden soll, verwendet werden. Eine Grafikkarte 4 bildet einen weiteren wesentlichen Bestandteil der Anordnung. Die Grafikkarte 4 verfügt bevorzugt über Ausgänge für zwei Bildschirme 5a und 5b, von denen der Bildschirm 5a für die zweidimensionale Darstellung und optional für dreidimensionale Darstellung geeignet ist, und der Bildschirm 5b für die dreidimensionale Darstellung geeignet ist. Die Bildschirme 5a und 5b sind über Datenleitungen 6a bzw. 6b mit den Ausgängen der Grafikkarte 4 verbunden.

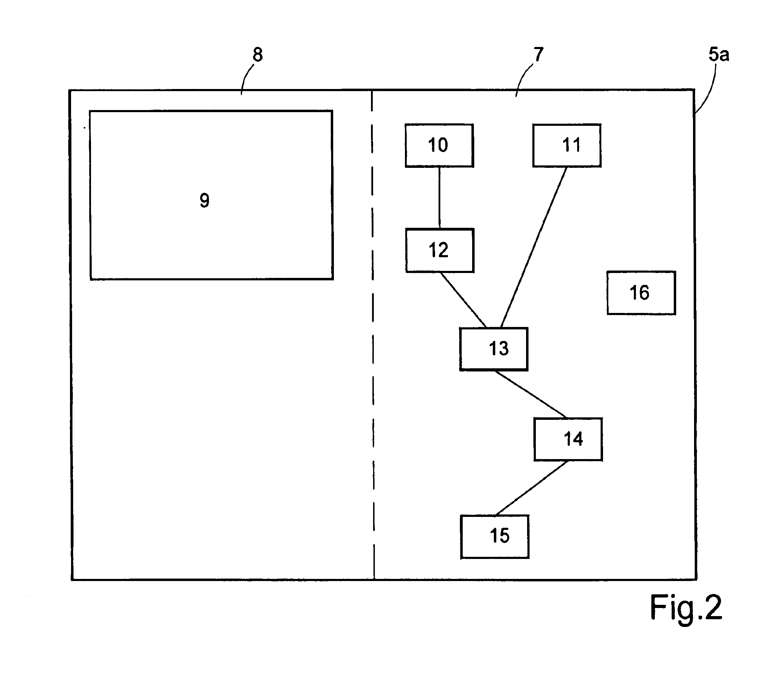

In Fig.2 ist ein Ausschnitt des Bildschirmes 5a gezeigt. Dabei wurde auf die Darstellung unwesentlicher graphischer Elemente, die beispielsweise zur Bedienung notwendig sind, verzichtet, ebenso wie bei Fig.1 auf die Darstellung weiterer Komponenten, die sich üblicherweise an Computern befinden, verzichtet wurde. Der Bildschirm 5a ist in zwei Hälften unterteilt, in der rechten Hälfte 7 des Bildschirms ist eine Ausführungsreihenfolge dargestellt, in der linken Hälfte 8 können ein oder mehrere Teilbilder oder das Gesamtbild in zweidimensionaler oder dreidimensionaler Darstellung in einem Fenster 9 gezeigt werden. Das Fenster 9 kann auch auf den Bildschirm 5b dargestellt werden, wenn es das zusammengesetzte, räumliche Bild zeigt.

Die in der rechten Hälfte 7 dargestellte Ausführungsreihenfolge zeigt mehrere Bearbeitungsmodule 10, 11, 12, 13, 14, 15 und 16. In den Knotenpunkten erfolgt die Bearbeitung des Bildes sequentiell und/oder parallel ganz oder in Teilen. Dabei werden entsprechend der Ausführungsreihenfolge die Bilddaten in den einzelnen Bearbeitungsmodulen in Abhängigkeit von einstellbaren Bearbeitungsparametern bearbeitet. Jedes Bearbeitungsmodul führt dabei einen oder mehrere Bearbeitungsschritte durch. Außerdem ist jedes Bearbeitungsmodul einem Knotenpunkt zugeordnet, wobei die Zuordnung eineindeutig ist. Die Ausführungsreihenfolge wird festgelegt, indem die Knotenpunkte gemäß einer Vorgabe durch einen Benutzer oder ein Programm verknüpft werden, die Verknüpfung ist wählbar.

Die Knotenpunkte und die Bearbeitungsmodule werden in Fig. 2 gleichermaßen durch die eingezeichneten Rechtecke symbolisiert, die Verknüpfungen erfolgen gemäß der eingezeichneten Verbindungslinien. So ist beispielsweise das Bearbeitungsmodul 13 an seiner Eingangsseite mit den Bearbeitungsmodulen 11 und 12 und an seiner Ausgangsseite mit dem Bearbeitungsmodul 14 verknüpft. Das Bearbeitungsmodul 16 wiederum ist mit keinem anderen verknüpft, es kann jedoch durch einen Benutzer interaktiv in die Baumstruktur, die von oben nach unten abgearbeitet wird, eingefügt werden. Ein Benutzer kann dabei interaktiv ein Bearbeitungsmodul auswählen, entsprechend der dem Bearbeitungsmodul vorliegenden Bilddaten kann dann das Bild und/oder ein oder mehrere Teilbilder i zusammengesetzt werden. Das eine Teilbild i oder die mehreren Teilbilder i werden dann im Fenster 9 des Bildschirms 5a dargestellt, das Bild wird räumlich auf dem Bildschirm 5b dargestellt. Alternativ kann auch jeweils nur das Gesamtergebnis am Ende der Ausführungsreihenfolge, hier also am Ausgang vom Bearbeitungsmodul 15, dargestellt werden. Entsprechendes gilt bei dem Vorliegen einer zeitlichen Sequenz von Bildern, bei dem die einem Bild zugeordnete Zeit t und zusätzlich noch i als Bearbeitungsparameter verwendet werden. Bei Auswahl einer Zeit t und eines Teilbildes i wird das entsprechende Teilbild im Fenster 9 und das sich ergebende Gesamtbild zur Zeit t auf dem Bildschirm 5b dargestellt. Jeder der Knotenpunkte kann außerdem mit den Knotenpunkten, mit denen er entsprechend der Ausführungsreihenfolge verknüpft ist, Daten austauschen.

Im vorliegenden Fall soll mit der dargestellten Ausführungsreihenfolge ein Text definiert werden, den von links nach rechts im Vordergrund durch eine Szene schwebt. Neben einer dreidimensionalen Darstellung ist dafür notwendig, daß sich der Text mit einer vorgegebenen Geschwindigkeit von links nach rechts bewegt, während sich die Hintergrundszene in bezug auf einen Fluchtpunkt mit langsamerer Geschwindigkeit von rechts nach links bewegt bzw. dreht, oder still steht. Die wesentlichen Eigenschaften des Textes werden im Bearbeitungsmodul 11 festgelegt. Zu diesen Eigenschaften zählen unter anderem der Text selbst, die Farbe der Schrift, der Schrifttyp und die Tiefeninformation. Die mit den Daten aus dem Bearbeitungsmodul 11 erzeugte Bildsequenz zeigt also nur einen farbigen Text. Die Informationen zur Hintergrundszene liegen im Bearbeitungsmodul 10 vor. Beide Bearbeitungsmodule 10 und 11 können ihre Daten beispielsweise von einer Festplatte einlesen. Im vorliegenden Beispiel handelt es sich dabei ebenfalls um eine zeitliche Bildsequenz, die jedoch vorab bearbeitet wurde, so daß an dieser Bildsequenz keine Änderungen vorzunehmen sind.

Das Bearbeitungsmodul 10 gibt seine Bilddaten an das Bearbeitungsmodul 12 weiter. In diesem Bearbeitungsmodul kann beispielsweise die Tönung des Hintergrundes bearbeitet werden. Anschließend werden die Bilddaten aus den Bearbeitungsmodulen 12 und 11 einem weiteren Bearbeitungsmodul 13 übergeben. Im Bearbeitungsmodul 13 werden die Bilddaten der beiden Bearbeitungsmodule kombiniert, d.h. entsprechend ihrer Tiefeninformationen überlagert und ein neues Gesamtbild erzeugt. Wählt der Betrachter dabei nur ein Teilbild i aus, so wird das Ergebnis auf dem Fenster 9 nur für dieses Teilbild i angezeigt. Da jedoch alle Teilbilder i miteinander verknüpft sind - beispielsweise kann es sich um verschiedene Ansichten ein und derselben Szene aus verschiedenen Aufnahmewinkeln handeln, oder aber um Schichtbilder, die dieselbe Ansicht bei verschiedenen Tiefen zeigen -, so läßt sich aufgrund dieser Informationen immer auch gleich das gesamte Bild berechnen, was dann auf dem Bildschirm 5b dargestellt wird. Werden Änderungen also nur an einem Teilbild vorgenommen, beispielsweise die Farbe des Textes abgewandelt, so können diese Änderungen automatisch auf die anderen Teilbilder übertragen werden. Diese Berechnungen erfolgen jedoch im Hintergrund und sind nur optional.

Nach der Kombination der Bilddaten übergibt das Bearbeitungsmodul 13 die Bilddaten an das Bearbeitungsmodul 14, in dem beispielsweise ein Gauß'scher Weichzeichner auf das Gesamtbild angewandt wird, oder eine Kontrastverschärfung, eine Schärfung der Kanten, etc. vorgenommen werden kann. Die im Bearbeitungsmodul 14 bearbeiteten Bilddaten werden schließlich an ein weiteres und letztes Bearbeitungsmodul 15 übergeben. Im Bearbeitungsmodul 15 werden die Daten der Bildsequenz auf eine Festplatte geschrieben.

Die dargestellten Module sind nur beispielhaft herausgegriffen, weitere Bearbeitungsmodule, wie sie in der Bildbearbeitung und Videobearbeitung üblich sind, lassen sich selbstverständlich ebenfalls verwenden. Auch Module, die zweidimensionalen Inhalt in dreidimensionalen Inhalt umwandeln, sind denkbar. Darüber hinaus können alle gängigen Eingabe- und Ausgabeformate verwendet werden. Im Falle von Standbildern sind dies beispielsweise bmp-, jpg-, gif-, png-, rla-, tga-, tiff-, und open-exr-Format, im Falle von Videodateien beispielsweise avi-, mpeg2-, und mpeg4-Format, jeweils auch als *Muttistream-Format,* um nur einige zu nennen.

Bei einer Änderung eines Bearbeitungsparameters können bereits bearbeitete Bilddaten in den Bearbeitungsmodulen, bevorzugt in Abhängigkeit von der Art der in einem Bearbeitungsmodul durchzuführenden Bearbeitungsschritte, gespeichert werden. Dies ist insbesondere dann vorteilhaft, wenn beispielsweise mehrmals durch den Nutzer zwischen den Teilbildern i gewechselt wird, so daß beim Wechsel zwischen Teilbildern die Bilddaten bereits vorangehend bearbeiteter Teilbilder nicht erneut berechnet werden müssen. Entsprechendes trifft auch für die Bearbeitungsmodulen an vorgeordneten Knotenpunkten: Bei Änderung eines lokalen Bearbeitungsparameters in einem aktuell ausgewählten Bearbeitungsmodul müssen die Bilddaten der vorgeordneten Bearbeitungsmodule nicht erneut berechnet werden. Wird beispielsweise die Position des Textes im Bearbeitungsmodul 13 geändert, so halten die Bearbeitungsmodule. 10, 11 und 12 ihre Bilddaten, so daß diese bei Anforderung durch das Bearbeitungsmodul 13 nicht neu berechnet werden müssen.

In Fig.3 ist ein Ausschnitt der Ausführungsreihenfolge aus Fig.2 dargestellt, an dem erläutert werden soll, wie die Menge der zu übertragenden Daten optimiert bzw. minimiert wird, so daß eine Bearbeitung insbesondere von 3D-Videosequenzen, die auf den Bildschirm 5b dargestellt werden, in Echtzeit möglich wird. Zwischen den Bearbeitungsmodulen ist eine Kommunikation in beiden Richtungen möglich. Ändern sich nun ein oder mehrere Bearbeitungsparameter, beispielsweise die Zeit t, zu welcher dargestellt werden soll, oder es wird ein anderes Teilbild i ausgewählt, oder aber die Tönung des Hintergrundes im Bearbeitungsmodul 12 wird geändert, so übermittelt für je zwei in der Ausführungsreihenfolge miteinander verknüpfte Knotenpunkte ein vorgeordnetes Bearbeitungsmodul, welches dem in der Ausführungsreihenfolge vorgeordneten Knotenpunkt zugeordnet ist, einem nachgeordnetem Bearbeitungsmodul, welches dem in der Ausführungsreihenfolge nachgeordneten Knotenpunkt zugeordnet ist, welche Bereiche der am vorgeordneten Bearbeitungsmodul vorliegenden Bilddaten von der Änderung des Bearbeitungsparameters betroffen sind. Für die Neubestimmung der Bilddaten am nachgeordneten Bearbeitungsmodul übermittelt dieses dem vorgeordneten Bearbeitungsmodul, welche mit dem oder den geänderten Bearbeitungsparametern neu bestimmte Bilddaten es zur Durchführung seiner Bearbeitungsschritte benötigt. Das vorgeordnete Bearbeitungsmodul berechnet nur diese Bilddaten neu und übermittelt sie an das nachgeordnete Bearbeitungsmodul. Benötigt das nachgeordnete Bearbeitungsmodul keine Bilddaten, so erfolgt auch keine Übermittlung an das vorgeordnete Bearbeitungsmodul.

Wird beispielsweise als Bearbeitungsparameter im Bearbeitungsmodul 11 die Farbe des Textes, der im Vordergrund durch das Bild schweben soll, von Rot auf Grün geändert, so teilt beispielsweise das Bearbeitungsmodul 11 dem Bearbeitungsmodul 13 mit, daß der gesamte Bereich des Bildes oder Teilbildes, in dem sich der Text in bezug auf das Bearbeitungsmodul 11 befindet, von der Änderung betroffen ist. Bei bzw. vor der Neuberechnung der Bilddaten im Bearbeitungsmodul 13 teilt dieses dem Bearbeitungsmodul 11 mit, daß es die Bilddaten für den Bereich des Bildes neubestimmt benötigt, in dem die Farbwerte des Textes modifiziert wurden, um diese in der Kombination der Bilder richtig zu berücksichtigen. Die Größe des Bereichs ist variabel und kann auch kleiner ausfallen, wenn der Text im Kombinationsbild, welches im Bearbeitungsmodul 13 erzeugt wird, teilweise verdeckt ist. Die Bilddaten müssen nur im angeforderten Bereich vom Vorgängermodul neu bestimmt werden Entsprechend kommunizieren auch die Bearbeitungsmodule 13 und 14 miteinander. Nachdem das Bearbeitungsmodul 13 dem Bearbeitungsmodul 14 mitgeteilt hat, welcher Bereich von der Änderung betroffen ist, teilt das Bearbeitungsmodul 14 dem Bearbeitungsmodul 13 mit, welche Bilddaten aus diesem Bereich, d.h. welchen Teilbereich es erneut benötigt. Der Weichzeichner wirkt sich im Beispiel auf die gesamten Bilddaten aus. Werden die Bilddaten jedoch nicht erneut übergeben und wird keine erneute Berechnung der Bilddaten im Bearbeitungsmodul 14 vorgenommen, so würde der Text im Bearbeitungsmodul 14 noch in der ursprünglichen Farbe erscheinen. Die dem Bearbeitungsmodul 13 vom Bearbeitungsmodul 12 übergebenen Bilddaten müssen nicht erneut berechnet werden.

Dabei können die Bearbeitungsschritte mindestens teilweise auf einer Grafikkarte durchgeführt werden. Auf diese Weise läßt sich das Verfahren weiter beschleunigen und der Echtzeit-Eindruck für einen Benutzer wird weiter verbessert. Dazu werden die Operationen aus den Bearbeitungsmodulen in Grafikbefehle für die Grafikkarte übersetzt. Die Grafikkarte muß daher vorgegebenen Standards genügen, beispielsweise dem OpenGL2.0-Standard. Wenn die Grafikkarte mit einbezogen wird, können die Bearbeitungsschritte unabhängig vom ursprünglichen Bildformat, üblicherweise RGB-Alpha mit je acht Bit Farbtiefe ausgeführt werden. Zur Berechnung können Formate verwendet werden, die die Strukturen der Grafikkarte vorteilhaft ausnutzen und auch höhere Genauigkeiten liefern, beispielsweise RGB-Alpha mit je zehn Bit Farbtiefe oder 16/32-Bit-Floating-Point-Formate. Auch sind Formate, die beispielsweise die Lumineszenz speichern, möglich. Dabei müssen nicht alle Bearbeitungsschritte auf der Grafikkarte ausgeführt werden, einfache und allgemeine Operationen können weiterhin auf vor-, parallel- oder nachgeschalteten Prozessoren durchgeführt werden, um weitere Berechnungsressourcen sinnvoll zu nutzen.

Benötigt ein Bearbeitungsmodul an einem nachgeordneten Knotenpunkt bei Änderung eines Bearbeitungsparameters keine neuen Bilddaten vom Vorgängerknotenpunkt, so kommt es zu keiner Mitteilung des Nachfolgerknotenpunkt an das Bearbeitungsmodul am Vorgängerknoten, so daß es letztendlich auch nicht zur erneuten Berechnung der Bilddaten am Vorgängerknotenpunkt kommt. Dies kann beispielsweise der Fall sein, wenn der über den Bildschirm schwebende Texte etwa in der Mitte eine Pause einlegt, so daß sich beim Wechsel der Animationszeit - des Bearbeitungsparameters t - nichts ändert, und keine erneute Berechnung stattfinden muß. Wird ein Bearbeitungsparameter in einem Modul oder global geändert, so bestimmt jedes Bearbeitungsmodul, welche von ihm berechnete Bilddaten sich ändern und teilt dies rekursiv allen nachgeordneten Bearbeitungsmodulen mit. Danach bestimmt jedes der nachgeordneten Bearbeitungsmodule, welche Bilddaten es neu benötigt. Rekursiv wird von allen nachgeordneten Bearbeitungsmodulen den Vorgängermodulen mitgeteilt, welche Daten neu benötigt werden. Dies bedeutet, daß bei jedem Knotenpunkt die Information vorliegt, welches die vorgeordneten Knotenpunkte sind und welche der Vorgängerknoten die im aktuellen Knotenpunkte vorliegenden Bilddaten beeinflussen können. Diese Informationen ergeben sich automatisch durch die Zusammenstellung der Ausführungsreihenfolge durch einen Benutzer sowie aufgrund der oben beschriebenen Funktionsweise der Bearbeitungsmodule. Werden neue Knotenpunkte mit Bearbeitungsmodulen eingefügt, so werden diese Informationen durch die entsprechenden Bearbeitungsmodule aktualisiert.

Ändert sich ein Bearbeitungsparameter in einem Bearbeitungsmodul, so werden alle möglichen nachgeordneten Knotenpunkte bestimmt und in den diesen Knotenpunkten zugeordneten Bearbeitungsmodulen untersucht, ob die Bilddaten ihre Gültigkeit behalten oder verlieren. Dabei ist es auch möglich, daß alle Bilddaten ihre Gültigkeit verlieren, so daß eine vollständige Neuberechnung notwendig ist. Dies kann beispielsweise bei einem großen Sprung in der Animationszeit t der Bildsequenz der Fall sein.

Mit dem vorangehend beschriebenen Verfahren ist es möglich, eine Bearbeitung von 3D-Bilddaten und 3D-Videosequenzen vorzunehmen und das Bearbeitungsergebnis bzw. die einzelnen Bearbeitungsschritte jeweils in Echtzeit nach zu verfolgen. Auf diese Weise wird die Effizienz der Bildbearbeitung von räumlich darstellbaren Bildern und Bildsequenzen erheblich verbessert.

### Bezugszeichenliste

- 1: Computer
- 2: Hauptplatine
- 3: Festplatte
- 4: Grafikkarte
- 5a, 5b: Bildschirm
- 6a, 6b: Datenleitungen
- 7: rechte Bildschirmhälfte
- 8: linke Bildschirmhälfte
- 9: Fenster
- 10 - 16: Bearbeitungsmodule

## Patentansprüche

1. Verfahren zur Bearbeitung eines räumlichen, aus Bilddaten von n Teilbildern i zusammengesetzten Bildes oder einer zeitlichen Sequenz von solchen Bildern, mit n > 1 und i = 1,...,n, bei dem
- die Bearbeitung des Bildes sequentiell und/oder parallel ganz oder in Teilen durch die Bearbeitung der Bilddaten in einzelnen Bearbeitungsmodulen entsprechend einer Ausführungsreihenfolge und in Abhängigkeit von einstellbaren Bearbeitungsparametern erfolgt,
- wobei jedes Bearbeitungsmodul einen oder mehrere Bearbeitungsschritte durchführt und die Ausführungsreihenfolge durch eine wählbare Verknüpfung der Bearbeitungsmodule festgelegt wird,
- und wobei jedes Bearbeitungsmodul mit den Bearbeitungsmodulen, mit denen es entsprechend der Ausführungsreihenfolge verknüpft ist, Daten austauschen kann,
- **dadurch gekennzeichnet, daß** bei einer Änderung eines oder mehrerer Bearbeitungsparameter für je zwei in der Ausführungsreihenfolge miteinander verknüpfte Bearbeitungsmodule
a) ein vorgeordnetes Bearbeitungsmodul einem nachgeordneten Bearbeitungsmodul übermittelt, welche Bereiche der am vorgeordneten Bearbeitungsmodul vorliegenden Bilddaten von der Änderung betroffen sind,
b) das nachgeordnete Bearbeitungsmodul dem vorgeordneten Bearbeitungsmodul übermittelt, welche mit dem oder den geänderten Bearbeitungsparametern neubestimmten Bilddaten es zur Durchführung seiner Bearbeitungsschritte benötigt,
c) und das vorgeordnete Bearbeitungsmodul nur diese Bilddaten neu berechnet und an das nachgeordnete Bearbeitungsmodul übermittelt.

2. Verfahren nach Anspruch 1, **dadurch gekennzeichnet, daß** bei einer Änderung eines Bearbeitungsparameters bereits bearbeitete Bilddaten in den Bearbeitungsmodulen, bevorzugt in Abhängigkeit von der Art der in einem Bearbeitungsmodul durchzuführenden Bearbeitungsschritte, gespeichert werden.

3. Verfahren nach Anspruch 2, **dadurch gekennzeichnet, daß** die Bearbeitungsschritte mindestens teilweise auf einer Grafikkarte durchgeführt werden.

4. Verfahren nach einem der vorgenannten Ansprüche, **dadurch gekennzeichnet, daß** die Bearbeitungsmodule und die Ausführungsreihenfolge auf einem Bildschirm dargestellt werden.

5. Verfahren nach einem der vorgenannten Ansprüche, **dadurch gekennzeichnet, daß** i als Bearbeitungsparameter verwendet wird und bei Auswahl eines Teilbildes i dieses auf einem ersten Bildschirm angezeigt wird.

6. Verfahren nach Anspruch 5, **dadurch gekennzeichnet, daß** das aus den n Teilbildern i zusammengesetzte Bild räumlich auf einem zweiten Bildschirm dargestellt wird.

7. Verfahren nach einem der Ansprüche 1 bis 4, **dadurch gekennzeichnet, daß** bei einer zeitlichen Sequenz von Bildern die einem Bild zugeordnete Zeit t und i als Bearbeitungsparameter verwendet werden und bei Auswahl einer Zeit t und eines Teitbildes i das entsprechende Teilbild auf einem ersten Bildschirm dargestellt wird.

8. Verfahren nach Anspruch 7, **dadurch gekennzeichnet, daß** das aus den n Teilbildern i zusammengesetzte Bild zur Zeit t räumlich auf einem zweiten Bildschirm dargestellt wird.

9. Verfahren nach einem der vorgenannten Ansprüche, **dadurch gekennzeichnet, daß** bei der Auswahl eines Bearbeitungsmoduls durch einen Benutzer das Bild und/oder ein oder mehrere Teilbilder i aus den dem Bearbeitungsmodul vorliegenden Bilddaten zusammengesetzt wird, wobei das eine Teilbild und/oder die mehreren Teilbilder i auf einem ersten Bildschirm und das Bild räumlich auf einem zweiten Bildschirm dargestellt werden.

## Claims

1. Method for processing a three-dimensional image which is composed of image data of n sub-images i or a sequence over time of such images, where n > 1 and i = 1, ..., n, wherein
- the images are processed sequentially and/or in parallel, in full or in parts, by processing the image data in individual processing modules corresponding to an execution sequence and depending on adjustable processing parameters,
- wherein each processing module executes one or more processing steps, and the execution sequence is defined by a selectable linkage of the processing modules,
- and wherein each processing module can exchange data with the processing modules with which it is linked according to the execution sequence,
- **characterized in that** in the case of a change of one or more processing parameters for two processing modules which are linked to each other in the execution sequence
a) an upstream processing module communicates to a downstream processing module which regions of the image data which are present at the upstream processing module are affected by the change,
b) the downstream processing module communicates to the upstream processing module which image data which are respecified with the changed processing parameter(s) it requires to execute its processing steps,
c) and the upstream processing module recalculates only these image data and communicates them to the downstream processing module.

2. Method according to Claim 1, **characterized in that** when a processing parameter changes, previously processed image data are stored in the processing modules, preferably depending on the type of processing steps which are to be executed in a processing module.

3. Method according to Claim 2, **characterized in that** the processing steps are at least partly executed on a graphics card.

4. Method according to any one of the preceding claims, **characterized in that** the processing modules and execution sequence are shown on a screen.

5. Method according to any one of the preceding claims, **characterized in that** i is used as a processing parameter, and when a sub-image i is selected, it is displayed on a first screen.

6. Method according to Claim 5, **characterized in that** the image which is composed of the n sub-images i is shown three-dimensionally on a second screen.

7. Method according to any one of Claims 1 to 4, **characterized in that** in the case of a sequence of images over time, the time t which is assigned to an image and i are used as processing parameters, and when a time t and a sub-image i are selected, the corresponding sub-image is shown on a first screen.

8. Method according to Claim 7, **characterized in that** the image which is composed of the n sub-images i at time t is shown three-dimensionally on a second screen.

9. Method according to any one of the preceding claims, **characterized in that** when a user selects a processing module, the image and/or one or more sub-images i are composed out of the image data which are present at the processing module, the one sub-image and/or the multiple sub-images i being shown on a first screen, and the image being shown three-dimensionally on a second screen.

## Revendications

1. Procédé de traitement d'une image tridimensionnelle, formée par des données images de n images partielles i ou d'une séquence chronologique de telles images, avec n > 1 et i = 1, ..., n, dans lequel
- le traitement de l'image est effectué séquentiellement et/ou parallèlement en totalité ou en parties par le traitement des données images dans différents modules de traitement conformément à une succession d'exécutions et en fonction de paramètres de traitement réglables,
- chaque module de traitement effectuant une ou plusieurs étapes de traitement et la succession d'exécutions étant définie par une liaison sélectionnable des modules de traitement,
- et chaque module de traitement pouvant échanger des données avec les modules de traitement auxquels il est lié conformément à la succession d'exécutions,
- **caractérisé en ce qu'**en cas de modification d'un ou de plusieurs paramètres de traitement pour respectivement deux modules de traitement liés entre eux dans la succession d'exécutions
a) un module de traitement situé en amont transmet à un module de traitement situé en aval quelles zones des données images, présentes dans le module de traitement en amont, sont concernées par la modification,
b) le module de traitement situé en aval transmet au module de traitement situé en amont quelles données images, nouvellement déterminées avec le ou les paramètres modifiés, lui sont nécessaires pour la mise en oeuvre de ses étapes de traitement,
c) et le module de traitement situé en amont recalcule uniquement ces données images et les transmet vers le module de traitement situé en aval.

2. Procédé selon la revendication 1, **caractérisé en ce que**, dans le cas d'une modification d'un paramètre de traitement, des données images, déjà traitées dans les modules de traitement, sont stockées de préférence en fonction du type des étapes de traitement à mettre en oeuvre dans un module de traitement.

3. Procédé selon la revendication 2, **caractérisé en ce que** les étapes de traitement sont mises en oeuvre au moins partiellement sur une carte graphique.

4. Procédé selon l'une quelconque des revendications précédentes, **caractérisé en ce que** les modules de traitement et la succession d'exécutions sont représentées sur un écran.

5. Procédé selon l'une quelconque des revendications précédentes, **caractérisé en ce que** i est utilisé comme paramètre de traitement et, lors de la sélection d'une image partielle i, celui-ci est affiché sur un premier écran.

6. Procédé selon la revendication 5, **caractérisé en ce que** l'image composée par les n images partielles i est représentée en 3D sur un deuxième écran.

7. Procédé selon l'une quelconque des revendications 1 à 4, **caractérisé en ce que** dans une séquence chronologique d'images, l'instant t, associé à une image, et i sont utilisés comme paramètres de traitement et, lors de la sélection d'un instant t et d'une image partielle i, l'image partielle correspondante est représentée sur un premier écran.

8. Procédé selon la revendication 7, **caractérisé en ce que** l'image composée par les n images partielles i à l'instant t est représentée en 3D sur un deuxième écran.

9. Procédé selon l'une quelconque des revendications précédentes, **caractérisé en ce que**, lors de la sélection d'un module de traitement par un utilisateur, l'image et/ou une ou plusieurs images partielles i sont formées à partir des données images présentes dans le module de traitement, sachant que l'une des images partielles et/ou la pluralité d'images partielles i sont représentées sur un premier écran et l'image est représentée en 3D sur un deuxième écran.
